(19) Europäisches Patentamt
European Patent Office
Office européen des brevets

(11) EP 2 279 340 B1

(12) FASCICULE DE BREVET EUROPEEN

(45) Date de publication et mention
de la délivrance du brevet:
05.06.2019 Bulletin 2019/23

(51) Int Cl.:
*F02D 23/02* (2006.01)    *F02D 41/00* (2006.01)
*F02B 37/013* (2006.01)    *F02B 37/18* (2006.01)
*F02B 37/22* (2006.01)    *F02B 37/24* (2006.01)

(21) Numéro de dépôt: 09745977.0

(22) Date de dépôt: 21.04.2009

(86) Numéro de dépôt international:
PCT/FR2009/050744

(87) Numéro de publication internationale:
WO 2009/138658 (19.11.2009 Gazette 2009/47)

(54) **PROCEDE DE COMMANDE D'UN MOTEUR**

VERFAHREN ZUR STEUERUNG EINES MOTORS

METHOD FOR CONTROLLING AN ENGINE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **29.04.2008 FR 0852887**

(43) Date de publication de la demande:
**02.02.2011 Bulletin 2011/05**

(73) Titulaire: **Renault S.A.S.
92100 Boulogne-Billancourt (FR)**

(72) Inventeurs:
• **FONTVIEILLE, Laurent
F-91190 Gif Sur Yvette (FR)**
• **REMINGOL, Michael
F-94200 Ivry Sur Seine (FR)**

(74) Mandataire: **Rougemont, Bernard
Renault Technocentre
Département Propriété Intellectuelle
Sce 00267 TCR GRA 2 36
1 Avenue du Golf
78288 Guyancourt Cedex (FR)**

(56) Documents cités:
**FR-A- 2 854 437      FR-A- 2 905 986
US-A1- 2003 177 765      US-A1- 2005 172 627
US-A1- 2007 227 139**

**Description**

La présente invention concerne le domaine du contrôle moteur.

Plus particulièrement, l'invention concerne un procédé de commande d'un moteur destiné à régler la pression de suralimentation dans un collecteur d'admission du moteur.

L'utilisation d'un tel procédé est particulièrement intéressante pour les moteurs diesel suralimentés par un ou plusieurs turbocompresseur(s) étagés.

Les véhicules automobiles, et en particulier les véhicules automobiles de type diesel, sont très souvent équipés d'un turbocompresseur de suralimentation du moteur en air, destiné à augmenter la quantité d'air admise dans les cylindres du moteur.

Le ou chaque turbocompresseur comporte une turbine, placée à la sortie du collecteur d'échappement du moteur et entraînée par les gaz d'échappement.

Il comporte, en outre, un compresseur monté sur le même axe que la turbine, assurant une compression de l'air qui entre dans le collecteur d'admission du moteur.

Dans ce cas, le ou chaque turbocompresseur est associé à un organe de réglage de la puissance des gaz d'échappement destiné à réguler la pression régnant dans le collecteur d'admission autour d'une valeur de consigne de pression de suralimentation élaborée.

Un tel organe de réglage correspond, par exemple, à des ailettes dans le cas d'un turbocompresseur à géométrie variable, ou à des soupapes de décharge placés aux bornes de la turbine dans le cas d'un turbocompresseur à géométrie fixe.

L'action sur ledit organe de réglage est contrôlée par une unité centrale qui peut réguler la pression de suralimentation dans le collecteur d'admission en fonction notamment de mesures de la pression de suralimentation en entrée de la turbine.

L'unité centrale comprend ainsi au moins un régulateur qui se charge de réguler la pression de suralimentation sur une consigne de pression de suralimentation.

Pour améliorer le temps de réponse de cette structure de régulation, la sortie du régulateur est ajoutée à une valeur de pré positionnement de l'organe de réglage pour fournir à ce dernier un signal de commande agissant sur la pression des gaz d'échappement du moteur.

Classiquement, la consigne de pression de suralimentation est cartographiée, par exemple, en fonction du régime moteur et du couple moteur, à partir des ailettes du turbocompresseur et corrigée en fonction de grandeurs physiques comme, par exemple, la pression après turbine, la température avant turbine et la température d'air entrant dans le compresseur.

La valeur de pré positionnement de l'organe de réglage se présente également sous la forme d'une cartographie, par exemple en régime moteur et couple moteur, corrigée en fonction de la pression atmosphérique et de la température d'air entrant dans le compresseur.

Ainsi, pour un point de la cartographie de pré positionnement de l'organe de réglage correspond une consigne de pression de suralimentation. Le pré positionnement va être renseigné en y inscrivant les valeurs de consignes de position des ailettes qui permettent d'atteindre la pression de consigne de suralimentation pour chaque point de fonctionnement du moteur.

Cependant, ce type de structure de régulation demeure limité.

En particulier, il souffre d'un défaut de robustesse pour un moteur comprenant un circuit de recirculation des gaz d'échappement à basse pression.

En effet, dans ce type de moteur, le circuit de recirculation de gaz d'échappement destiné à diminuer la quantité d'oxydes d'azote produit par le moteur est assuré en mettant en communication le circuit d'échappement et le circuit d'admission.

Plus précisément, dans le cas où un seul turbocompresseur est prévu, il est assuré en mettant en communication le circuit d'échappement après un filtre à particules et le circuit d'admission avant le compresseur via une section de passage dont la dimension est réglée par une vanne de recirculation de gaz d'échappement. Dans le cas où des turbocompresseurs étagés sont prévus (basse pression, haute pression), il est assuré en mettant en communication le circuit d'échappement après un filtre à particules et le circuit d'admission avant le compresseur du turbocompresseur basse pression via une section de passage dont la dimension est réglée par une vanne de recirculation de gaz d'échappement.

En ramenant les gaz d'échappement en amont du compresseur ou dans le cas où deux turbocompresseurs étagés sont prévus, en amont du turbocompresseur basse pression, la température entrant dans le compresseur ou compresseur basse pression selon le cas, est alors un mélange des températures du débit d'air frais et du débit de recirculation de gaz d'échappement basse pression.

Le circuit de recirculation de gaz d'échappement impacte le contrôle de suralimentation dans la mesure où la température d'air frais entrant dans le compresseur, ou compresseur basse pression selon le cas, intervient dans la détermination de la consigne de pression de suralimentation et de la valeur de pré positionnement des ailettes.

La température d'air frais entrant dans le compresseur, ou compresseur basse pression selon le cas, est actuellement mesurée par un capteur de température placé dans un débitmètre d'air frais en amont du compresseur.

Or, la difficulté de réaliser un mélange homogène en température en amont du compresseur pour une mesure correcte de la température et les risques d'encrassement du capteur liés à la proximité des gaz du circuit de recirculation des gaz d'échappement ne permettent pas d'effectuer des mesures correctes de température.

Par ailleurs, utiliser un capteur de température en entrée du compresseur peut poser des problèmes lié au surcoût de l'utilisation d'un nouveau capteur ou encore au manque de place pour le positionner en amont du compresseur.

De plus, le débit d'air entrant dans le turbocompresseur basse pression est égal à la somme du débit d'air mesuré par le débitmètre avec le débit circulant dans le circuit de recirculation basse pression. Or, dans le cas de deux turbocompresseurs étagés (basse pression et haute pression), le fait d'utiliser un débitmètre en entrée du compresseur HP ou dans le circuit de recirculation pose des problèmes analogues à ceux de la mise en oeuvre d'un capteur de température.

Le document US 2005/172627 A1 propose un procédé de commande d'un compresseur permettant de déterminer une pression maximale de suralimentation. Cependant, les gaz d'échappement sont réinjectés dans le conduit d'admission en aval du compresseur.

Le document FR 2 854 437 A propose un procédé de commande d'un compresseur de turbocompresseur. Cependant, le moteur n'est pas équipé d'un circuit de recirculation des gaz d'échappement.

Le document US 2003/177765 A1 propose un procédé de commande d'un circuit de recirculation des gaz d'échappement dans un moteur équipé d'un turbocompresseur. Cependant, les gaz d'échappement sont réinjectés dans le conduit d'admission en aval du compresseur.

Le document FR 2 905 986 A décrit un procédé d'estimation d'un débit d'air dans un moteur équipé d'un compresseur et d'un dispositif de recirculation des gaz d'échappement. Ce débit d'air estimé est utilisé pour commander le dispositif de recirculation des gaz d'échappement. Cependant, ce document ne propose aucune solution pour commander le compresseur.

Le document US 2007/227139 A1 concerne un procédé pour estimer les performances d'un compresseur. Ce document ne propose pas de solution pour commander le compresseur.

Un but de la présente invention est d'améliorer la régulation de la pression de suralimentation du collecteur d'admission et donc la commande d'un moteur.

Un autre but de l'invention est de s'affranchir de capteurs de température des gaz en amont du compresseur, ou du compresseur basse pression selon le cas.

Dans le cas particulier de turbocompresseurs étagés, un autre but de l'invention est encore de s'affranchir d'un débitmètre en amont du compresseur basse pression.

A cet effet, on prévoit selon l'invention un procédé de commande d'un moteur suralimenté par un unique turbocompresseur ou par un ensemble formé par un turbocompresseur basse pression et un turbocompresseur haute pression caractérisé en ce que :

- on calcule une température des gaz à l'entrée d'un compresseur du turbocompresseur ou à l'entrée du compresseur du turbocompresseur basse pression; puis
- on détermine une consigne de pression de suralimentation, la valeur de la consigne dépendant notamment de la température calculée des gaz à l'entrée du compresseur du turbocompresseur ou à l'entrée du compresseur du turbocompresseur basse pression de façon à effectuer un réglage de la pression de suralimentation dans un collecteur d'admission du moteur.

On prévoit également, selon l'invention, un dispositif de commande d'un moteur suralimenté par un unique turbocompresseur ou par un ensemble formé par un turbocompresseur basse pression et un turbocompresseur haute pression pour la mise en oeuvre du procédé selon l'invention, caractérisé en ce qu'il comprend des moyens de calcul adaptés pour calculer une température à l'entrée du compresseur du turbocompresseur ou à l'entrée du compresseur du turbocompresseur basse pression et des moyens pour déterminer une consigne de pression de suralimentation dépendante de la température calculée des gaz à l'entrée du compresseur du turbocompresseur ou à l'entrée du compresseur du turbocompresseur basse pression de façon à effectuer un réglage d'une pression de suralimentation dans un collecteur d'admission du moteur.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :

- la figure 1 montre schématiquement un moteur comportant un système de commande selon un premier mode de réalisation de l'invention;

- la figure 2 montre schématiquement un moteur comportant un système de commande selon un second mode de réalisation de l'invention;
- la figure 3 montre schématiquement le moteur des figures 1 et 2;
- la figure 4 montre schématiquement un moteur comportant un système de commande selon un deuxième mode de réalisation de l'invention ;
- la figure 5 montre schématiquement le moteur de la figure 4 ;
- la figure 6 représente un mode de réalisation selon l'invention d'une structure de régulation d'une pression de suralimentation d'un collecteur du moteur des figures 1 et 2 ;
- la figure 7 représente un mode de réalisation selon l'invention d'une structure de régulation d'une pression de suralimentation d'un collecteur du moteur de la figure 3.

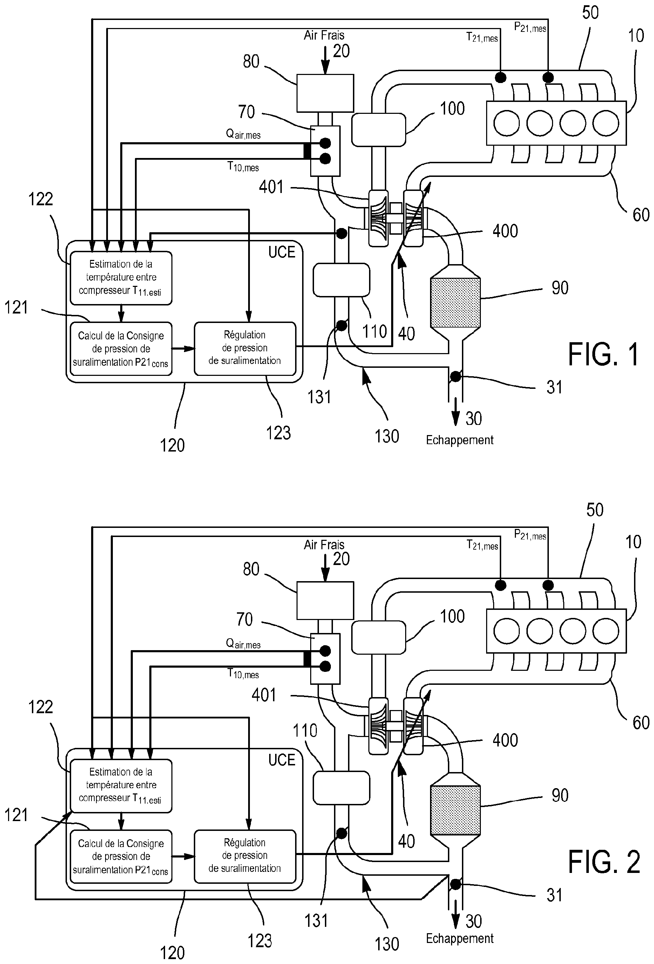

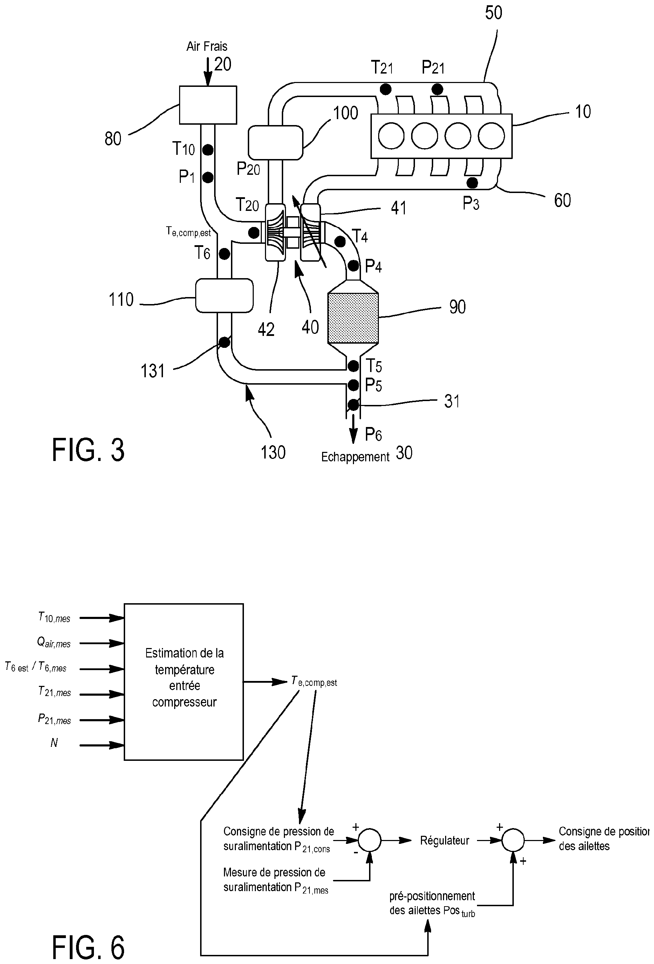

En référence aux figures 1 à 5, un moteur 10 à combustion interne d'un véhicule automobile, de type diesel, est alimenté en air frais par une entrée 20 et rejette les gaz brûlés par un échappement 30.

Le circuit d'admission d'air frais assurant l'alimentation en air frais du moteur 10 comporte essentiellement un filtre à air 80 et un débitmètre d'air 70 alimentant, par l'intermédiaire d'un turbocompresseur 40 ou de deux turbocompresseurs étagés (basse pression 41 et haute pression 42) et de conduites appropriées, le collecteur d'admission 50 du moteur 10.

Un collecteur d'échappement 60 récupère les gaz d'échappement issus de la combustion et évacue ces derniers vers l'extérieur, par l'intermédiaire du turbocompresseur 40, ou selon le cas des turbocompresseurs 41, 42, et d'un filtre à particules 90 destiné à réduire la quantité de particules, notamment de suies, rejetées dans l'environnement.

En ce qui concerne les turbocompresseurs 40, 41 ou 42, chacun comporte essentiellement une turbine 400, 410, 420 entraînée par les gaz d'échappement et un compresseur 401, 411, 421 monté sur le même axe que la turbine et assurant une compression de l'air distribué par le filtre à air 80, dans le but d'augmenter la quantité d'air admise dans les cylindres du moteur 10 via un circuit de recirculation des gaz d'échappement 130.

Dans ce circuit de recirculation des gaz d'échappement 130 de type basse pression, le circuit est externe au circuit d'alimentation. Il est assuré en mettant en communication le circuit d'échappement après le filtre à particules 90 et le circuit d'admission avant le compresseur 401, ou selon le cas avant le compresseur basse pression 411, via une section de passage dont la dimension est réglée par une vanne de recirculation des gaz d'échappement 131.

L'ouverture de la vanne 131 est pilotée par une unité centrale 120, on peut ainsi réintroduire des gaz d'échappement dans le circuit d'admission.

La vanne d'échappement 31 se situe, quant à elle, dans la ligne d'échappement après la vanne de recirculation des gaz d'échappement 131 afin d'augmenter la différence de pression au bord du circuit de recirculation des gaz d'échappement 130 et ainsi le taux de recirculation pour diminuer les quantités d'oxydes d'azote présentes.

Par ailleurs, un refroidisseur 110 peut être placé entre le compresseur 401, ou selon le cas le compresseur basse pression 411, et la vanne 131 pour refroidir la température en entrée du compresseur 401, 411.

Le turbocompresseur 401, 411 est associé à un organe de réglage de la puissance des gaz d'échappement destiné à réguler la pression régnant dans le collecteur d'admission 50 autour d'une valeur de consigne de pression de suralimentation $P21_{cons}$.

Un tel organe de réglage peut correspondre à des ailettes dans le cas d'une géométrie variable ou à des soupapes de décharge dans le cas d'une géométrie fixe.

Par ailleurs, dans le cas d'un turbocompresseur unique 40, un échangeur 100 et un volet d'admission d'air peuvent être placés entre le compresseur 42 et le collecteur d'admission 50 pour refroidir l'air à la sortie du compresseur 42. Dans le cas de turbocompresseurs étagés 41, 42, un échangeur basse pression 101 peut être prévu entre le compresseur basse pression 411 et le compresseur haute pression 421 et un échangeur haute pression 102 peut être prévu entre le compresseur haute pression 421 et le collecteur d'admission 50.

Selon l'invention, l'unité centrale 120 récupère par l'intermédiaire de capteurs appropriés des signaux de mesure de pression et de température.

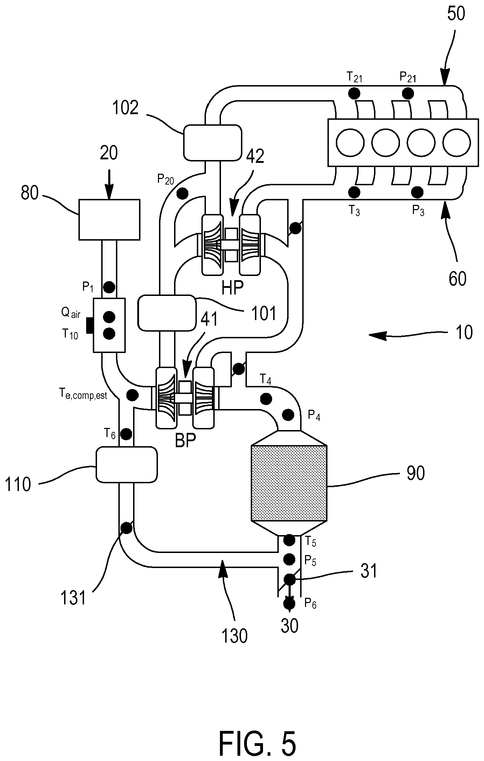

Comme illustré sur les figures 1 ou 5, avantageusement, elle peut récupérer la pression de suralimentation $P21_{mes}$ et la température $T21_{mes}$ dans le collecteur d'admission 50.

Elle peut également recevoir la pression en entrée et en sortie de la turbine ou selon le cas de la turbine basse pression $P3_{mes}$ et $P4_{mes}$, la pression en entrée et en sortie du compresseur ou selon le cas du compresseur basse pression $P1_{mes}$ et $P20_{mes}$, la pression avant et après la vanne d'échappement $P5_{mes}$ et $P6_{mes}$.

Elle peut récupérer aussi, par exemple, la température $T20_{mes}$ en sortie du compresseur ou selon le cas du compresseur basse pression, celle en entrée $T3_{mes}$ et $T4_{mes}$ en sortie de la turbine ou selon le cas de la turbine basse pression, celles en sortie du filtre à air $T10_{mes}$ et avant la vanne d'échappement $T5_{mes}$.

Par ailleurs, l'unité centrale 120 comprend des moyens de détermination 121 de la consigne de pression de suralimentation $P21_{cons}$ et des moyens de calcul 122 d'une température des gaz en entrée du compresseur $Te_{comp,est}$. Dans le cas d'un turbocompresseur unique, les moyens 121 de l'unité centrale 120 permettent également de déterminer une valeur de pré positionnement des ailettes $Pos_{turb}$.

Les mesures ainsi que les consignes sont fournies en entrée d'une structure de régulation 123 comprise dans l'unité centrale 120.

Cette structure 123 comporte un ou plusieurs régulateurs en série.

Dans une variante de réalisation, un seul régulateur permet de réguler la pression de suralimentation dans le collecteur d'admission 50 sur la consigne de pression de suralimentation $P21_{cons}$.

Plus précisément, cette structure de régulation 123 dépend de la valeur de la température des gaz en entrée du compresseur $Te_{comp,est}$ qui est calculée dans l'unité centrale 120.

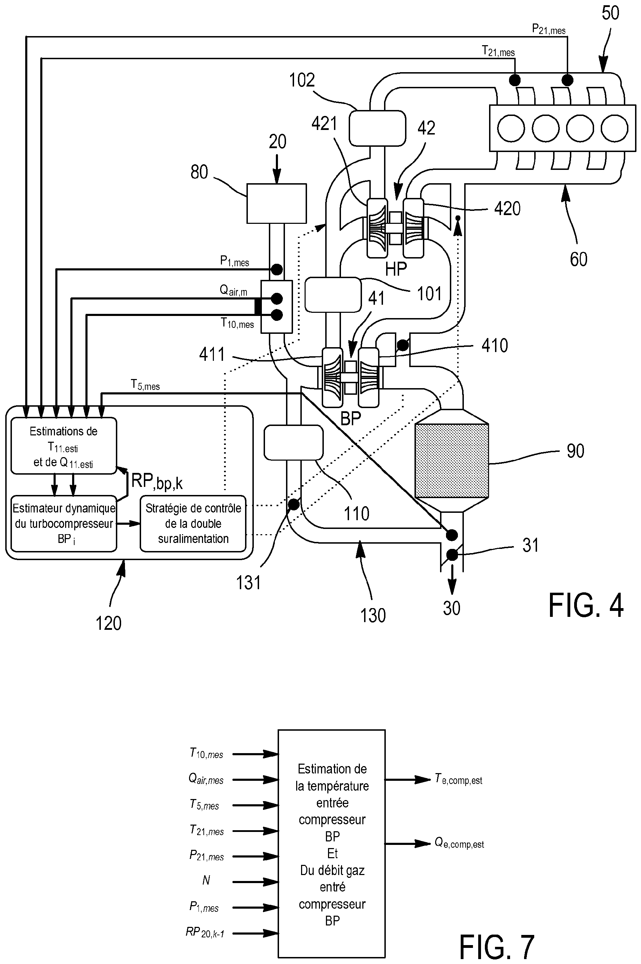

Cette structure 123 sera détaillée plus loin en référence à la figure 4.

Selon l'invention, le calcul de la température des gaz en entrée du compresseur $Te_{comp,est}$ est réalisé au moins grâce aux étapes suivantes, à savoir un calcul du débit de gaz en entrée du compresseur $Qe_{comp,est}$ et la détermination de la température en sortie du refroidisseur T6 du système de recirculation des gaz d'échappement 130.

De préférence, l'étape de calcul du débit de gaz en entrée du compresseur $Qe_{comp,est}$ est réalisée en fonction du débit de gaz en entrée du moteur Qmot et du temps de transfert des gaz dans le circuit de suralimentation $t_{trans}$, ces deux variables ayant été déterminées, respectivement, lors des étapes préalables décrites ci dessous.

L'étape de la détermination du débit de gaz en entrée du moteur Qmot comprend des entrées relatives aux informations relatives aux pressions et températures telles que fournies, par exemple, par les capteurs ainsi que une ou plusieurs autres entrées relatives à des grandeurs physiques représentatives, par exemple, d'état du moteur.

On peut ainsi citer comme entrées:

- la pression de suralimentation $P21_{mes}$ ;
- la température dans le collecteur d'admission $T21_{mes}$;
- la constante de l'air $R$ ;
- le régime de rotation moteur N ;
- la cylindrée du moteur $V_{cyl}$;
- le rendement volumétrique du moteur $\eta_r$;

Le débit de gaz en entrée du moteur Qmot est alors défini à l'aide de la relation (1) suivante :

$$Qmot = \frac{P21_{mes}}{R \cdot T21_{mes}} \times \frac{V_{cycl} \cdot N}{2 \cdot 60} \eta_r\left(N, \frac{P21_{mes}}{R \cdot T21_{mes}}\right)(1)$$

Il est à noter que la valeur du rendement volumétrique du moteur $\eta_r$ s'exprime comme une fonction du régime moteur de la densité des gaz admis défini comme le rapport de la pression de suralimentation $P21_{mes}$ et le produit de la constante de l'air R par la température dans le collecteur d'admission $T21_{mes}$ comme le souligne la relation (2) suivante :

$$\eta_r = \left(\frac{P21_{mes}}{R \cdot T21_{mes}}\right) \ (2)$$

Pour un moteur comprenant un turbocompresseur unique, l'étape de la détermination du temps de transfert des gaz dans le circuit de suralimentation $t_{trans}$ est réalisée grâce à la relation (3) suivante :

$$t_{trans} = \frac{d}{dt}\left(\frac{P21_{mes} \cdot V_{sural}}{R \cdot T21_{mes}}\right)(3)$$

où $V_{sural}$ définit le volume du circuit de suralimentation entre la sortie du compresseur 401 et l'entrée du moteur 10.

En revanche, pour un moteur avec deux turbocompresseurs étagés 41, 42, l'étape de détermination du temps de transfert des gaz dans le circuit de suralimentation $t_{trans}$ est réalisée grâce à la relation (3') suivante :

$$t_{trans} = \frac{d}{dt}\left(\frac{P20 \cdot V_{sural,\,BP}}{R \cdot T21_{mes}}\right) - \frac{d}{dt}\left(\frac{P21_{mes} \cdot V_{sural,\,HP}}{R \cdot T21_{mes}}\right) \ (3')$$

où $V_{sural,BP}$ définit le volume du circuit de suralimentation entre la sortie du compresseur basse pression 411 et l'entrée du compresseur haute pression 421, $V_{sural,HP}$ définit le volume du circuit de suralimentation entre la sortie du compresseur haute pression et l'entrée moteur, et P20 la pression en entrée du compresseur haute pression.

La pression P20 est estimée par la relation de récurrence suivante :

$$P_{20,k} = RP_{20,k-1} * P_1 \quad (3'')$$

où R est le rapport de compression basse pression fourni par un estimateur dynamique, et k l'indice de récurrence de la relation.

L'étape suivante du calcul du débit de gaz à l'entrée du compresseur $Qe_{comp,est}$ ou selon le cas du compresseur basse pression s'exprime alors comme le débit de gaz en entrée du moteur $Q_{mot}$ diminué d'un terme correctif dérivé qu'exprime le temps de transfert des gaz dans le circuit de suralimentation $t_{trans}$.

Dans le cas d'un turbocompresseur unique, le débit de gaz à l'entrée du compresseur s'exprime alors :

$$Qe_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P21_{mes}}{R \cdot T21_{mes}} \cdot V_{sural} \right) \right] (4)$$

Dans le cas d'un moteur à turbocompresseurs étagés (basse pression, haute pression), le débit de gaz à l'entrée du compresseur basse pression 411 s'exprime alors :

$$Qe_{comp,est} = 3600 \times \left[ \begin{array}{c} \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) \\ - \frac{d}{dt} \left( \frac{P20}{R \cdot T21_{mes}} \cdot V_{sural,BP} \right) - \frac{d}{dt} \left( \frac{P21_{mes}}{R \cdot T21_{mes}} \cdot V_{sural,HP} \right) \end{array} \right] (4')$$

Avec un moteur comportant plusieurs turbocompresseurs étagés, il est donc nécessaire d'estimer la pression P20, pour avoir une estimation du débit de gaz à l'entrée du compresseur basse pression, alors que cette estimation n'est pas utile avec un compresseur unique.

On obtient au final une valeur du débit de gaz entrant dans le compresseur basse pression en s'affranchissant d'un débitmètre.

Par ailleurs, à l'étape suivante, la température en sortie du refroidisseur T6 du système de recirculation des gaz d'échappement 130 peut être déterminée par calcul ($T6_{mes}$) ou être mesurée ($T6_{est}$) avec des moyens adaptés.

Le calcul de la température en sortie du refroidisseur $T6_{est}$ du système de recirculation des gaz d'échappement 130 comprend des entrées relatives à :

- la température avant la vanne d'échappement $T5_{mes}$;
- la température de l'eau de refroidissement du refroidisseur du système de recirculation des gaz d'échappement $T_{eau,mes}$;
- l'efficacité de refroidissement du refroidisseur du système de recirculation des gaz d'échappement $\varepsilon_{egr\_bp}$

La température en sortie du refroidisseur $T6_{est}$ est alors définie à partir de la relation (5) suivante :

$$T6_{est} = T5 - \varepsilon_{egr\_bp} (T5 - T_{eau,mes}) \quad (5)$$

Il est à noter que la variable définissant l'efficacité de refroidissement du refroidisseur du système de recirculation des gaz d'échappement $\varepsilon_{egr\_bp}$ est une fonction qui dépend de plusieurs paramètres et de manière avantageuse de la seule variable Qegr qui est le débit circulant dans le circuit de recirculation ; celui-ci étant défini par la relation :

$$Q_{EGR} = Qecomp,est - Q_{air,frais} \quad (5')$$

Après avoir déterminé le débit de gaz à l'entrée du compresseur $Qe_{comp,es}t$ et la température en sortie du refroidisseur T6 du système de recirculation des gaz d'échappement 130, on en déduit à l'étape suivante par calcul la température des gaz en entrée du compresseur $Te_{comp,est}$ comme le montre la relation (6) ci-dessous :

$$Te_{comp,est} = \frac{Cpech \cdot Qe_{comp,est} \cdot T6 + Cpair \cdot Qair \cdot T10_{mes} - Cpech \cdot Qair \cdot T6}{(Cpair - Cpech) \cdot Qair + Cpech \cdot Qe_{comp,est}} \quad (6)$$

Elle se définit également avec des entrées relatives à:

- la chaleur spécifique de l'air Cpair;
- la chaleur spécifique des gaz d'échappement Cpech;
- le débit d'air frais estimé Qair;
- la température en sortie du filtre à air $T10_{mes}$.

Il est à noter que la chaleur spécifique de l'air Cpair à l'admission est déterminée de préférence en fonction de la température en sortie du filtre à air $T10_{mes}$ du système de recirculation des gaz d'échappement 130.

La chaleur spécifique des gaz d'échappement Cpech est déterminée, quand à elle, préférentiellement, en fonction de la température avant la vanne d'échappement $T5_{mes}$ et d'une variable $R_{i\_ech}$ définie comme le produit du rapport du débit massique de carburant et du débit massique d'air avec un coefficient stoechiométrique Ks d'une valeur de 14.8 comme le souligne la relation (7) ci-dessous :

$$R_{i\_ech} = K_s \frac{\dot{Q}carb}{\dot{Q}air} \quad (7)$$

On obtient ainsi à cette étape une valeur de température des gaz en entrée du compresseur $Te_{comp,est}$ en s'affranchissant d'un capteur de température dans le circuit d'air frais.

Elle est ainsi calculée directement à partir des caractéristiques du moteur et des mesures ou estimations des grandeurs existantes suivantes :

- la température en sortie du filtre à air $T10_{mes}$
- le débit d'air frais mesuré Qair,mes ;
- la température du collecteur d'admission $T21_{mes}$ ;
- la pression de suralimentation $P21_{mes}$ ;
- la température en sortie du refroidisseur mesurée $T6_{mes}$ ou calculée $T6_{est}$ selon le mode de réalisation choisi.

Le système de commande du moteur qui régule la pression de suralimentation présente alors une robustesse vis-à-vis de l'information relative à la température $Te_{comp,est}$ des gaz en entrée du compresseur, ou selon le cas du compresseur basse pression.

En effet, le calcul de la température $Te_{comp,est}$ des gaz en entrée du compresseur ou selon le cas du compresseur basse pression permet de s'affranchir des erreurs de mesures liées à l'inhomogénéité du mélange en température en amont du compresseur constitué de la température en sortie du circuit de recirculation des gaz et de la température d'air frais en sortie du filtre à air.

Dans l'unité centrale 120 comportant le régulateur précité, le régulateur de pression de suralimentation reçoit, en entrée, l'écart entre une consigne de pression de suralimentation $P21_{cons}$ fonction de la température des gaz en entrée du compresseur $Te_{comp,est}$ calculée et de la mesure de la pression de suralimentation $P21_{mes}$ récupérée par l'unité centrale 120.

La correction diminue la consigne de pression de suralimentation $P21_{cons}$ pour limiter le régime du turbocompresseur et protège ainsi les turbocompresseurs contre les survitesses et les températures élevées.

Dans le cas d'un turbocompresseur unique, à géométrie variable, la sortie du régulateur est ensuite ajoutée au résultat du calcul d'une valeur de pré-positionnement des ailettes $Pos_{turb}$ pour obtenir une consigne de position des ailettes. Le résultat obtenu dans le calcul de la température des gaz en entrée du compresseur $Te_{comp,est}$ entre également comme variable d'entrée dans le calcul de cette valeur de pré-positionnement des ailettes $Pos_{turb}$. Le pré-positionnement est ainsi corrigé en fonction de la température d'air frais entrant dans le compresseur. La consigne de position des ailettes permet alors de fournir, en sortie de l'unité centrale 120, un signal de commande qui vient contrôler l'organe de réglage de la puissance des gaz d'échappement et, plus précisément les ailettes, pour réguler la pression régnant dans le collecteur d'admission 50 autour de la valeur de consigne de pression de suralimentation $P21_{cons}$ et agir sur la pression des gaz d'échappement du moteur.

**Revendications**

1. Procédé de commande d'un moteur (10) suralimenté par un unique turbocompresseur (40) ou par un ensemble formé par un turbocompresseur basse pression (41) et un turbocompresseur haute pression (42), selon lequel on calcule une température $Te_{comp,est}$ des gaz à l'entrée d'un compresseur (401) du turbocompresseur (40) ou à l'entrée du compresseur (411) du turbocompresseur basse pression (41), puis on détermine une consigne de pression de suralimentation $P21_{cons}$, la valeur de la consigne dépendant notamment de la température calculée $Te_{comp,est}$ des gaz à l'entrée du compresseur du turbocompresseur (40) ou à l'entrée du compresseur du turbocompresseur basse pression (41) de façon à effectuer un réglage de la pression de suralimentation dans un collecteur d'admission (50) du moteur (10), **caractérisé en ce que**

   - le calcul de la température des gaz en entrée du compresseur $Te_{comp,est}$ est réalisé au moins grâce aux étapes suivantes, à savoir un calcul du débit de gaz en entrée du compresseur $Qe_{comp,est}$ et la détermination de la température en sortie d'un refroidisseur T6 d'un système de recirculation des gaz d'échappement 130 susceptible de réintroduire des gaz d'échappement à l'entrée du compresseur dans le circuit d'admission du moteur, et
   - le calcul du débit de gaz en entrée du compresseur $Qe_{comp,est}$ est réalisé en fonction du débit de gaz en entrée du moteur Qmot et du temps de transfert des gaz dans le circuit de suralimentation $t_{trans}$.

2. Procédé selon la revendication 1, **caractérisé en ce qu'**on calcule la température $Te_{comp,est}$ des gaz à l'entrée du compresseur ou à l'entrée du compresseur basse pression par la relation suivante :

$$Te_{comp,\,est} = \frac{Cpech \cdot Qe_{comp,\,est} \cdot T6 + Cpair \cdot Qair \cdot T10_{mes} - Cpech \cdot Qair \cdot T6}{(Cpair - Cpech) \cdot Qair + Cpech \cdot Qe_{comp,\,est}}$$

où :

   - $Qe_{comp,est}$ définit un débit de gaz à l'entrée du compresseur ;
   - Cpair définit la chaleur spécifique de l'air;
   - Cpech définit la chaleur spécifique des gaz d'échappement;
   - Qair définit un débit d'air frais;
   - $T10_{mes}$ définit une température en sortie d'un filtre à air ;
   - T6 définit une température en sortie d'un refroidisseur d'un système de recirculation des gaz d'échappement.

3. Procédé selon la revendication précédente, **caractérisé en ce qu'**il comprend une sous étape de calcul du débit de gaz $Qe_{comp,est}$ à l'entrée du compresseur (401), ou du compresseur basse pression (411).

4. Procédé selon la revendication précédente, **caractérisé en ce que** le calcul du débit de gaz à l'entrée du compresseur $Qe_{comp,est}$ est fonction du débit de gaz en entrée du moteur Qmot et du temps de transfert $t_{trans}$ dans le circuit de suralimentation du moteur (10).

5. Procédé selon la revendication précédente, **caractérisé en ce que**, le moteur comprenant un unique turbocompresseur (40), on calcule le débit de gaz à l'entrée du compresseur (401) par la relation :

$$Qe_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P21_{mes}}{R \cdot T21_{mes}} \cdot V_{sural} \right) \right]$$

avec

$$Qmot = \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) \text{ et } t_{trans} = \frac{d}{dt} \left( \frac{P21_{mes} \cdot V_{sural}}{R \cdot T21_{mes}} \right)$$

et

   - $P21_{mes}$ est la pression de suralimentation ;

- $T21_{mes}$ est la température dans le collecteur d'admission ;
- R est la constante de l'air;
- N est le régime de rotation moteur ;
- $V_{cyl}$ est la cylindrée du moteur ;
- $\eta_r$ est le rendement volumétrique du moteur ;
- $V_{sural}$ est le volume du circuit de suralimentation entre la sortie du compresseur (401) et l'entrée du moteur (10).

**6.** Procédé selon la revendication 4, **caractérisé en ce que**, le moteur comprenant un ensemble formé par un turbocompresseur basse pression (41) et un turbocompresseur haute pression (42), on calcule le débit de gaz à l'entrée du compresseur (411) du turbocompresseur basse pression par la relation :

$$Qe_{comp,est} = 3600 \times \left[ \frac{P21_{mes}}{R \cdot T21_{mes}} \times \frac{V_{cycl} \cdot N}{2 \cdot 60} \eta\left(N, \frac{P21_{mes}}{R \cdot T21_{mes}}\right) - \frac{d}{dt}\left(\frac{P20}{R \cdot T21_{mes}} \cdot V_{sural,BP}\right) - \frac{d}{dt}\left(\frac{P21_{mes}}{R \cdot T21_{mes}} \cdot V_{sural,HP}\right) \right]$$

Avec

$$Qmot = \frac{P21_{mes}}{R \cdot T21_{mes}} \times \frac{V_{cycl} \cdot N}{2 \cdot 60} \eta_r\left(N, \frac{P21_{mes}}{R \cdot T21_{mes}}\right)$$

Et

$$t_{trans} = \frac{d}{dt}\left(\frac{P20 \cdot V_{sural,\ BP}}{R \cdot T21_{mes}}\right) - \frac{d}{dt}\left(\frac{P21_{mes} \cdot V_{sural,\ HP}}{R \cdot T21_{mes}}\right)$$

Et

- $P21_{mes}$ est la pression de suralimentation ;
- $T21_{mes}$ est la température dans le collecteur d'admission ;
- R est la constante de l'air;
- N est le régime de rotation moteur ;
- $V_{cyl}$ est la cylindrée du moteur ;
- $\eta_r$ est le rendement volumétrique du moteur ;
- $V_{sural,BP}$ définit le volume du circuit de suralimentation entre la sortie du compresseur basse pression (411) et l'entrée du compresseur haute pression (421) ;
- $V_{sural,HP}$ définit le volume du circuit de suralimentation entre la sortie du compresseur haute pression (421) et l'entrée moteur (10), et
- P20 la pression en entrée du compresseur haute pression (421).

**7.** Procédé selon la revendication précédente, **caractérisé en ce qu'**on estime la pression P20 en entrée du compresseur haute pression (421) par la relation de récurrence :

$$P_{20,k} = RP_{20,k-1} * P_{20,1}$$

Avec k l'indice de récurrence, P1 la première valeur estimée de la pression en entrée du compresseur haute pression, et R le rapport de compression basse pression fourni par un estimateur dynamique.

**8.** Procédé selon l'une des revendications 2 à 7, **caractérisé en ce qu'**il comprend une sous étape de calcul de la température en sortie du refroidisseur T6 du système de recirculation des gaz d'échappement (130).

**9.** Procédé selon la revendication précédente, **caractérisé en ce que** le calcul de la température en sortie du refroidisseur T6 du système de recirculation des gaz d'échappement (130) est définie à partir de la relation suivante :

$$T6 = T5 - \varepsilon_{egr\_bp} (T5 - T_{eau,mes})$$

Où :

- T5 définit une température avant une vanne d'échappement;
- $T_{eau,mes}$ définit une température de l'eau de refroidissement du refroidisseur du système de recirculation des gaz d'échappement ;
- $\varepsilon_{egr\_bp}$ définit l'efficacité de refroidissement du refroidisseur du système de recirculation des gaz d'échappement.

10. Procédé selon l'une des revendications précédentes, **caractérisé en ce qu'**on détermine une variable de pré-positionnement d'un organe de réglage de la puissance des gaz d'échappement $Pos_{turb}$, la valeur de la variable dépendant notamment de la température calculée des gaz à l'entrée du compresseur $Te_{comp,est}$.

11. Procédé selon l'une des revendications précédentes, **caractérisé en ce qu'**on fournit un signal de commande pour contrôler l'organe de réglage de la puissance des gaz d'échappement, la valeur du signal dépendant de la variable de pré positionnement $Pos_{turb}$.

12. Dispositif de commande d'un moteur (10) suralimenté par un unique turbocompresseur (40) ou par un ensemble formé par un turbocompresseur basse pression (41) et un turbocompresseur haute pression (42), comprenant

- des moyens de calcul adaptés pour calculer une température $Te_{comp,est}$ à l'entrée du compresseur du turbocompresseur (40) ou à l'entrée du compresseur du turbocompresseur basse pression (41), et
- des moyens pour déterminer une consigne de pression de suralimentation $P21_{cons}$ dépendante de la température calculée $Te_{comp,est}$ des gaz à l'entrée du compresseur du turbocompresseur (40) ou à l'entrée du compresseur du turbocompresseur basse pression (41),

**caractérisé en ce que** le calcul de température et de pression sont réalisés pour effectuer un Procédé conformément à l'une des revendications précédentes

## Patentansprüche

1. Verfahren zur Steuerung eines Motors (10), der von einem einzigen Turbolader (40) oder von einer aus einem Niederdruck-Turbolader (41) und einem Hochdruck-Turbolader (42) bestehenden Anordnung aufgeladen wird, gemäß welchem eine Temperatur $Te_{comp,est}$ der Gase am Eingang eines Verdichters (401) des Turboladers (40) oder am Eingang des Verdichters (411) des Niederdruck-Turboladers (41) berechnet wird und anschließend ein Ladedruck-Sollwert $P21_{cons}$ bestimmt wird, wobei der Wert des Sollwertes insbesondere von der berechneten Temperatur $Te_{comp,est}$ der Gase am Eingang des Verdichters des Turboladers (40) oder am Eingang des Verdichters des Niederdruck-Turboladers (41) abhängt, um eine Regelung des Ladedrucks in einem Ansaugkrümmer (50) des Motors (10) durchzuführen, **dadurch gekennzeichnet, dass**

- die Berechnung der Temperatur der Gase am Eingang des Verdichters $Te_{comp,est}$ mindestens mithilfe der folgenden Schritte ausgeführt wird, nämlich einer Berechnung der Gasdurchflussmenge am Eingang des Verdichters $Qe_{comp,est}$ und der Bestimmung der Temperatur am Ausgang eines Kühlers T6 eines Abgasrückführsystems (130), das dazu eingerichtet ist, Abgase am Eingang des Verdichters in das Einlasssystem des Motors rückzuführen, und
- die Berechnung der Gasdurchflussmenge am Eingang des Verdichters $Qe_{comp,est}$ in Abhängigkeit von der Gasdurchflussmenge am Eingang des Motors Qmot und der Durchlaufzeit der Gase im Ladekreis $t_{trans}$ ausgeführt wird.

2. Verfahren nach Anspruch 1, **dadurch gekennzeichnet, dass** die Temperatur $Te_{comp,est}$ der Gase am Eingang des Verdichters oder am Eingang des Niederdruckverdichters durch die folgende Beziehung berechnet wird:

$$Te_{comp,est} = \frac{Cpech \cdot Qe_{comp,est} \cdot T6 + Cpair \cdot Qair \cdot T10_{mes} - Cpech \cdot Qair \cdot T6}{(Cpair - Cpech) \cdot Qair + Cpech \cdot Qe_{comp,est}}$$

wobei:

- $Qe_{comp,est}$ eine Gasdurchflussmenge am Eingang des Verdichters bezeichnet;
- Cpair die spezifische Wärme der Luft bezeichnet;
- Cpech die spezifische Wärme der Abgase bezeichnet;
- Qair eine Durchflussmenge von Frischluft bezeichnet;
- $T10_{mes}$ eine Temperatur am Ausgang eines Luftfilters bezeichnet;
- T6 eine Temperatur am Ausgang eines Kühlers eines Abgasrückführsystems bezeichnet.

3.  Verfahren nach dem vorhergehenden Anspruch, **dadurch gekennzeichnet, dass** es einen Teilschritt der Berechnung der Gasdurchflussmenge $Qe_{comp,est}$ am Eingang des Verdichters (401) oder des Niederdruckverdichters (411) umfasst.

4.  Verfahren nach dem vorhergehenden Anspruch, **dadurch gekennzeichnet, dass** die Berechnung der Gasdurchflussmenge am Eingang des Verdichters $Qe_{comp,est}$ in Abhängigkeit von der Gasdurchflussmenge am Eingang des Motors Qmot und von der Durchlaufzeit $t_{trans}$ im Ladekreis des Motors (10) erfolgt.

5.  Verfahren nach dem vorhergehenden Anspruch, **dadurch gekennzeichnet, dass**, wenn der Motor einen einzigen Turbolader (40) umfasst, die Gasdurchflussmenge am Eingang des Verdichters (401) durch die Beziehung berechnet wird:

$$Qe_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P21_{mes}}{R \cdot T21_{mes}} \cdot V_{sural} \right) \right],$$

mit

$$Qmot = \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right)$$

und

$$t_{trans} = \frac{d}{dt} \left( \frac{P21_{mes} \cdot V_{sural}}{R \cdot T21_{mes}} \right),$$

wobei

- $P21_{mes}$ der Ladedruck ist,
- $T21_{mes}$ die Temperatur im Ansaugkrümmer ist,
- R die Konstante der Luft ist,
- N die Drehzahl des Motors ist;
- $V_{cyl}$ der Hubraum des Motors ist;
- $\eta_r$ der volumetrische Wirkungsgrad des Motors ist;
- $V_{sural}$ das Volumen des Ladekreises zwischen dem Ausgang des Verdichters (401) und dem Eingang des Motors (10) ist.

6.  Verfahren nach Anspruch 4, **dadurch gekennzeichnet, dass**, wenn der Motor eine aus einem Niederdruck-Turbolader (41) und einem Hochdruck-Turbolader (42) bestehende Anordnung umfasst, die Gasdurchflussmenge am Eingang des Verdichters (411) des Niederdruck-Turboladers durch die Beziehung berechnet wird:

$$Qe_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P20}{R \cdot T21_{mes}} \cdot \right.$$

$$\left. V_{sural,BP} \right) - \frac{d}{dt} \left( \frac{P21_{mes}}{R \cdot T21_{mes}} \cdot V_{sural,HP} \right) \right],$$

mit

$$Qmot \ = \ \frac{P21_{mes}}{R \cdot T21_{\mathrm{mes}}} \times \frac{V_{cycl} \cdot N}{2 \cdot 60} \ \eta_r \left( N, \frac{P21_{\mathrm{mes}}}{R \cdot T21_{\mathrm{mes}}} \right)$$

und

$$t_{\mathrm{trans}} \ = \ \frac{d}{dt} \left( \frac{P20 \cdot V_{\mathrm{sural,BP}}}{R \cdot T21_{\mathrm{mes}}} \right) - \frac{d}{dt} \left( \frac{P21_{\mathrm{mes}} \cdot V_{\mathrm{sural,HP}}}{R \cdot T21_{\mathrm{mes}}} \right),$$

wobei

- $P21_{mes}$ der Ladedruck ist,
- $T21_{mes}$ die Temperatur im Ansaugkrümmer ist,
- R die Konstante der Luft ist,
- N die Drehzahl des Motors ist;
- $V_{cyl}$ der Hubraum des Motors ist;
- $\eta_r$ der volumetrische Wirkungsgrad des Motors ist;
- $V_{sural,BP}$ das Volumen des Ladekreises zwischen dem Ausgang des Niederdruckverdichters (411) und dem Eingang des Hochdruckverdichters (421) bezeichnet;
- $V_{sural,HP}$ das Volumen des Ladekreises zwischen dem Ausgang des Hochdruckverdichters (421) und dem Eingang des Motors (10) bezeichnet, und
- P20 der Druck am Eingang des Hochdruckverdichters (421) ist.

7. Verfahren nach dem vorhergehenden Anspruch, **dadurch gekennzeichnet, dass** der Druck P20 am Eingang des Hochdruckverdichters (421) durch die Rekurrenzbeziehung

$$P_{20,k} \ = \ RP_{20,k-1} {}^{\ast} P_{20,1}$$

geschätzt wird, wobei k der Rekurrenzindex ist, P1 der geschätzte erste Wert des Drucks am Eingang des Hochdruckverdichters ist und R das Niederdruck-Verdichtungsverhältnis ist, das von einer dynamischen Schätzfunktion geliefert wird.

8. Verfahren nach einem der Ansprüche 2 bis 7, **dadurch gekennzeichnet, dass** es einen Teilschritt der Berechnung der Temperatur am Ausgang des Kühlers T6 des Abgasrückführsystems (130) umfasst.

9. Verfahren nach dem vorhergehenden Anspruch, **dadurch gekennzeichnet, dass** die Berechnung der Temperatur am Ausgang des Kühlers T6 des Abgasrückführsystems (130) anhand der folgenden Beziehung definiert ist:

$$T6 = T5 \ - \ \varepsilon_{\mathrm{egr\_bp}} \ (T5 - T_{\mathrm{eau,mes}}),$$

wobei:

- T5 eine Temperatur vor einem Auslassventil ist;
- $T_{eau,mes}$ eine Temperatur des Kühlwassers des Kühlers des Abgasrückführsystems bezeichnet;
- $\varepsilon_{egr\_bp}$ die Kühlungseffizienz des Kühlers des Abgasrückführsystems bezeichnet.

10. Verfahren nach einem der vorhergehenden Ansprüche, **dadurch gekennzeichnet, dass** eine Variable der Vorpositionierung eines Organs zur Regelung der Leistung der Abgase $POS_{turb}$ bestimmt wird, wobei der Wert der Variablen insbesondere von der berechneten Temperatur der Gase am Eingang des Verdichters $Te_{comp,est}$ abhängt.

11. Verfahren nach einem der vorhergehenden Ansprüche, **dadurch gekennzeichnet, dass** ein Steuersignal zum Steuern des Organs zur Regelung der Leistung der Abgase geliefert wird, wobei der Wert des Signals von der Variablen der Vorpositionierung $POS_{turb}$ abhängt.

**12.** Vorrichtung zur Steuerung eines Motors (10), der von einem einzigen Turbolader (40) oder von einer aus einem Niederdruck-Turbolader (41) und einem Hochdruck-Turbolader (42) bestehenden Anordnung aufgeladen wird, umfassend:

- Berechnungsmittel, die dafür ausgelegt sind, eine Temperatur $Te_{comp,est}$ am Eingang des Verdichters des Turboladers (40) oder am Eingang des Verdichters des Niederdruck-Turboladers (41) zu berechnen, und
- Mittel zum Bestimmen eines Ladedruck-Sollwertes $P21_{cons}$, der von der berechneten Temperatur $Te_{comp,est}$ der Gase am Eingang des Verdichters des Turboladers (40) oder am Eingang des Verdichters des Niederdruck-Turboladers (41) abhängig ist, **dadurch gekennzeichnet, dass** die Berechnung der Temperatur und des Drucks vorgenommen wird, um ein Verfahren gemäß einem der vorhergehenden Ansprüche durchzuführen.

**Claims**

**1.** Method for controlling an engine (10) which is supercharged by means of a single turbocharger (40), or by means of an assembly formed by a low-pressure turbocharger (41) and a high-pressure turbocharger (42), wherein a temperature $Te_{comp,est}$ of the gases is calculated at the inlet to a compressor (401) of the turbocharger (40), or at the inlet to the compressor (411) of the low-pressure turbocharger (41), and then a boost pressure set point $P21_{cons}$ is determined, with the set-point value depending in particular on the temperature calculated $Te_{comp,est}$ of the gases at the inlet to the compressor of the turbocharger (40) or at the inlet to the compressor of the low-pressure turbocharger (41), such as to carry out regulation of the boost pressure in an inlet manifold (50) of the engine (10), **characterized in that**

- the temperature of the gases at the inlet to the compressor $Te_{comp,est}$ is calculated at least by virtue of the following steps, namely calculating the gas flow rate at the inlet to the compressor $Qe_{comp,est}$ and determining the temperature at the outlet of a cooler T6 of an exhaust gas recirculation system 130 able to reintroduce the exhaust gases at the inlet to the compressor into the intake circuit of the engine, and
- the gas flow rate at the inlet to the compressor $Qe_{comp,est}$ is calculated as a function of the gas flow rate at the inlet to the engine Qmot and of the transfer time of the gases in the boost circuit $t_{trans}$.

**2.** Method according to Claim 1, **characterized in that** the temperature $Te_{comp,est}$ of the gases at the inlet to the compressor or at the inlet to the low-pressure compressor is calculated by means of the following relationship:

$$Te_{comp,est} = \frac{Cpech \cdot Qe_{comp,est} \cdot T6 + Cpair \cdot Qair \cdot T10_{mes} - Cpech \cdot Qair \cdot T6}{(Cpair - Cpech) \cdot Qair + Cpech \cdot Qe_{comp,est}}$$

wherein:

- $Qe_{comp,est}$ defines a flow of gas at the inlet to the compressor;
- Cpair defines the specific heat of the air;
- Cpech defines the specific heat of the exhaust gases;
- Qair defines a flow of cold air;
- $T10_{mes}$ defines a temperature at the outlet from an air filter;
- T6 defines a temperature at the outlet from a cooler of an exhaust gas recirculation system.

**3.** Method according to the preceding claim, **characterized in that** it comprises a sub-step of calculation of the flow of gas $Qe_{comp,est}$ at the inlet to the compressor (401) or to the low-pressure compressor (411).

**4.** Method according to the preceding claim, **characterized in that** the calculation of the flow of gas at the inlet to the compressor $Qe_{comp,est}$ depends on the flow of gas at the inlet to the engine Qmot and on the time of transfer $t_{trans}$ into the boost circuit of the engine (10).

**5.** Method according to the preceding claim, **characterized in that**, with the engine comprising a single turbocharger (40), the flow of gas at the inlet to the compressor (401) is calculated by the relationship:

$$Qe_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P21_{mes}}{R \cdot T21_{mes}} \cdot V_{sural} \right) \right]$$

with

$$Qmot = \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) \quad \text{and} \quad t_{trans} = \frac{d}{dt} \left( \frac{P21_{mes} \cdot V_{sural}}{R \cdot T21_{mes}} \right)$$

and

- $P21_{mes}$ is the boost pressure;
- $T21_{mes}$ is the temperature in the inlet manifold;
- R is the constant of the air;
- N is the engine revolution speed;
- $V_{cyl}$ is the engine capacity;
- $\eta_r$ is the volumetric output of the engine;
- $V_{sural}$ is the volume of the boost circuit between the outlet from the compressor (401) and the inlet to the engine (10).

6. Method according to Claim 4, **characterized in that**, with the engine comprising an assembly formed by a low-pressure turbocharger (41) and a high-pressure turbocharger (42), the flow of gas at the inlet to the compressor (411) of the low-pressure turbocharger is calculated by the relationship:

$$Qc_{comp,est} = 3600 \times \left[ \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right) - \frac{d}{dt} \left( \frac{P20}{R \cdot T21_{mes}} \cdot V_{sural,BP} \right) - \frac{d}{dt} \left( \frac{P21_{mes}}{R \cdot T21_{mes}} \cdot V_{sural,HP} \right) \right]$$

with

$$Qmot = \frac{P21_{mes}}{R \cdot T21_{mes}} \times \frac{V_{cycl} \cdot N}{2 \cdot 60} \eta_r \left( N, \frac{P21_{mes}}{R \cdot T21_{mes}} \right)$$

and

$$t_{trans} = \frac{d}{dt} \left( \frac{P20 \cdot V_{sural,BP}}{R \cdot T21_{mes}} \right) - \frac{d}{dt} \left( \frac{P21_{mes} \cdot V_{sural,HP}}{R \cdot T21_{mes}} \right)$$

and

- $P21_{mes}$ is the boost pressure;
- $T21_{mes}$ is the temperature in the inlet manifold;
- R is the constant of the air;
- N is the engine revolution speed;
- $V_{cyl}$ is the engine capacity;
- $\eta_r$ is the volumetric output of the engine;
- $V_{sural,BP}$ defines the volume of the boost circuit between the outlet from the low-pressure compressor (411) and the inlet to the high-pressure compressor (421);
- $V_{sural,HP}$ defines the volume of the boost circuit between the outlet from the high-pressure compressor (421) and the engine inlet (10) and
- P20 is the pressure at the inlet to the high-pressure compressor (421).

7. Method according to the preceding claim, **characterized in that** the pressure P20 at the inlet to the high-pressure compressor (421) is estimated by the recurrence relationship:

$$P_{20,k} = RP_{20,k-1} * P_{20,1}$$

with k as the index of recurrence, P1 as the first estimated value of the pressure at the inlet to the high-pressure compressor, and R as the low-pressure compression ratio supplied by a dynamic estimator.

8. Method according to one of Claims 2 to 7, **characterized in that** it comprises a sub-step of calculation of the temperature at the outlet from the cooler T6 of the exhaust gas recirculation system (130).

9. Method according to the preceding claim, **characterized in that** the calculation of the temperature at the outlet from the cooler T6 of the exhaust gas recirculation system (130) is defined by means of the following relationship:

$$T6 = T5 - \varepsilon_{egr\_bp} (T5 - T_{eau,mes})$$

where:

    - T5 defines a temperature before an exhaust valve;
    - $T_{eau,mes}$ defines a temperature of the cooling water of the cooler of the exhaust gas recirculation system;
    - $\varepsilon_{egr\_bp}$ defines the efficiency of cooling of the cooler of the exhaust gas recirculation system.

10. Method according to one of the preceding claims, **characterized in that** a pre-positioning variable of a unit for regulation of the power of the exhaust gases $Pos_{turb}$ is determined, with the value of the variable depending in particular on the temperature calculated of the gases at the inlet to the compressor $Te_{comp,est}$.

11. Method according to one of the preceding claims, **characterized in that** a control signal is supplied in order to control the unit for regulation of the power of the exhaust gases, with the value of the signal depending on the pre-positioning variable $Pos_{turb}$.

12. Device for controlling an engine (10) which is supercharged by means of a single turbocharger (40), or by means of an assembly formed by a low-pressure turbocharger (41) and a high-pressure turbocharger (42), it comprising

    - calculation means which are suitable for calculating a temperature $Te_{comp,est}$ at the inlet to the compressor of the turbocharger (40) or at the inlet to the compressor of the low-pressure turbocharger (41), and
    - means for determining a boost pressure set point $P21_{cons}$ which is dependent on the temperature calculated $Te_{comp,est}$ of the gases at the inlet to the compressor of the turbocharger (40) or at the inlet to the compressor of the low-pressure turbocharger (41), **characterized in that** the temperature and pressure are calculated in order to carry out a method according to one of the preceding claims.

**FIG. 1**

Air Frais 20
80
70
$Q_{air,mes}$
$T_{10,mes}$
401
122
121
UCE
Estimation de la température entre compresseur $T_{11.esti}$
Calcul de la Consigne de pression de suralimentation $P21_{cons}$
Régulation de pression de suralimentation
120
123
131
110
40
130
$T_{21,mes}$
$P_{21,mes}$
50
10
60
400
90
31
30
Echappement

**FIG. 2**

Air Frais 20
80
70
$Q_{air,mes}$
$T_{10,mes}$
401
122
121
110
UCE
Estimation de la température entre compresseur $T_{11.esti}$
Calcul de la Consigne de pression de suralimentation $P21_{cons}$
Régulation de pression de suralimentation
120
123
131
130
100
40
$T_{21,mes}$
$P_{21,mes}$
50
10
60
400
90
31
30
Echappement

50

Air Frais

20

80

T10

P1

P20

T20

100

T21  P21

10

41

P3

60

$T_{e,comp,est}$

T6

110

42  40

T4

P4

90

131

T5

130

P5

31

P6

Echappement  30

FIG. 3

$T_{10,mes}$

$Q_{air,mes}$

$T_{6\,est}$ / $T_{6,mes}$

$T_{21,mes}$

$P_{21,mes}$

$N$

Estimation de la
température
entrée
compresseur

$T_{e,comp,est}$

Consigne de pression de
suralimentation $P_{21,cons}$

Mesure de pression de
suralimentation $P_{21,mes}$

+
−

Régulateur

+
+

Consigne de positior
des ailettes

pré-positionnement
des ailettes $Pos_{turb}$

FIG. 6

FIG. 4

P21,mes

T21,mes

50

102

421   42

420

20

80

60

P1,mes

Qair,m

T10,mes

101

HP

411

41

T5,mes

410

Estimations de
T11.esti
et de Q11.esti

RP,bp,k

BP

90

Estimateur dynamique
du turbocompresseur
BP i

Stratégie de contrôle
de la double
suralimentation

110

131

30

31

120

130

FIG. 7

$T_{10,mes}$

$Q_{air,mes}$

$T_{5,mes}$

$T_{21,mes}$

$P_{21,mes}$

$N$

$P_{1,mes}$

$RP_{20,k-1}$

Estimation de
la température
entrée
compresseur
BP
Et
Du débit gaz
entré
compresseur
BP

$T_{e,comp,est}$

$Q_{e,comp,est}$

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005172627 A1
- FR 2854437 A
- US 2003177765 A1
- FR 2905986 A
- US 2007227139 A1